# EUROPEAN PATENT APPLICATION

(11) **EP 0 588 749 A2**
(43) Date of publication of application: **23.03.1994**
(21) Application number: 93500115.6
(22) Date of filing: 30.07.1993
(51) Int. Cl.: C08G 65/28, C08G 65/32, C06B 45/10, C08G 65/22, C07D 303/16, C08G 65/10

(54) **A process for producing hydroxy-terminated glycidyl azide-glycidyl nitrate copolymers**

(30) Priority: 31.07.1992 ES 9201622
(71) Applicant: UNION ESPANOLA DE EXPLOSIVOS S.A., E-28006 Madrid (ES)
(72) Inventor: Ochoa Gomez, Jose Ramon, E-28760 Tres Cantos (Madrid) (ES); Blanco Gomez, Juan Jose, E-28490 Becerril De La Sierra (Madrid) (ES)
(74) Representative: Garcia Cabrerizo, Francisco

(57) **Abstract**

A process for producing energetic polymers on the basis of hydroxy-terminated p-toluenesulfonate polyglycidil (PGTS) (I), wherein n is a whole number between 5 and 100, comprising (a) mixing an organic solvent with a catalyst adapted to generate oxonium ions by reacting with a monomer (GTS) and alcohol ; (b) adding a monomer (GTS) dissolved in a previous mixture so that the speed of addition is less than that of polymerization.

The PGTS (I) is a novel product useful for synthesizing between other energetic polymers, such as GAP (II), PGN (III) or the GAP-PGN (IV) copolymers thereof, wherein m is a whole number such as 0 m n.

GAP (II), PGN (III) and GAP-PGN (IV) copolymers are obtained by a reaction between PGTS (I) and a metallic azide or a metallic nitrate or a mixture of both.

The GAP (II) and PGN (III) polymers are applied in producing solid propellants for rockets as energetic links.

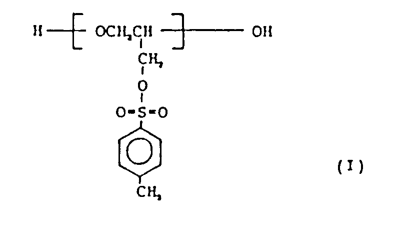

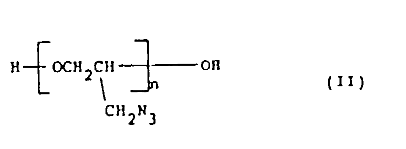

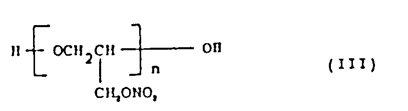

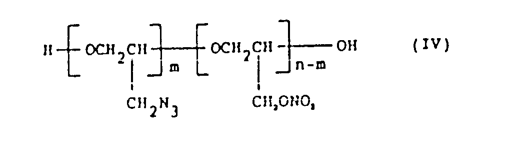

## Description

### FIELD OF THE INVENTION

The invention relates to a process for the synthesis of a new polymer, hydroxy-terminated p-toluenesulfonate polyglycidil (PGTS). PGTS is a raw material excellent for synthesizing other energetic, explosive and photosensitive polymers. These energetic polymers may include hydroxy-terminated polyglycidil azide (GAP) homopolymer, hydroxy-terminated polyglycidil nitrate (PGN) homopolymer and hydroxy-terminated (GAP-PGN) copolymers thereof.

Consequently, the invention also relates to a process for producing GAP and PGN homopolymers, as well as GAP-PGN copolymers on the basis of hydroxy-terminated polyglycidil p-toluenesulfanate (PGTS).

### PRIOR ART

Glycidil p-toluenesulfonate (PGTS) polymers have not been heretofore described. PGTS is a polyether having in its lateral chain one of the best salient groups in organic chemistry. Due to this, it is an excellent raw material for synthesizing other polymers by substitution reaction with different nucleophilic agents providing compounds of interest for different fields. Starting with PGTS, energetic, explosive and photosensitive polymers can be obtained by simply adequately substituting p-toluenesulfanate groups by other adequate groups.

Although these PGTS polymers have not been heretofore described, the process for producing the same consisting in a cationic polymerization by a ring opening polymerization is well known and a detailed description of the mechanism of such polymerizations can be found in "Comprehensive Polymer Science", G.E. Eastmond, A. Ledwith, S. Russo and P. Sigwalt eds. Vol. 3, Part I, Chapters 45-48, Pergamon Press, Oxford, 1989.

Consequently, the primary object of this invention is a process for obtaining new PGTS polymers. The new PGTS polymers produced by the present invention also constitute an additional object of the invention.

Both GAP and PGN polymers are applicable in forming solid propellants for rockets as energetic links. Their usefulness in the present application consists in that they have to be hydroxy-terminated and in their functionality (number of OH groups per molecule) should be equal or exceed 2.

All processes described in the patent literature for producing GAP (Australian 60799/86; US 4486351; US 4268450 and Spanish patent application 9101804) have a common denominator by starting with the same raw material: polyepichlorhydrin (PECH). These processes generally present the disadvantage that it is not easy to substitute the chloride groups, which entails operative drastic conditions of operation or long periods of reaction. Therefore, it would be desirable to obtain GAP polymers starting from a raw material which would obviate these disadvantages. On the other hand, the only known process for obtaining PGN is described in PCT patent application WO 90/15092 and consists in polymerizing a corresponding monomer: glycidil nitrate (GN), a monomer which by carrying an energetic group in its molecule, requires careful handling for avoiding the risk of ignition and/or explosion. Therefore, it will be convenient to proceed with a non-dangerous process for producing PGN polymers.

The second object of the invention is to eliminate the described disadvantages in the synthesis of both the GAP and PGN polymers; this is feasible by starting with a completely different raw material: hydroxy-terminated polyglycidil p-toluenesulfonate (PGTS), a polymer which in its side chain has one of the best salient groups in organic chemistry, due to the fact that its substitution by an azide group and/or a nitrate group is relatively simple.

Additionally, there is also provided a simple process for obtaining GAP-PGN copolymers starting with PGTS.

In the case where p-toluenesulfanate groups present in PGTS are substituted for:
i) azide groups, GAP would be obtained, or alternatively by
ii) nitrate groups, PGN would be obtained, or alternatively by
iii) azide groups and nitrate, GAP-PGN copolymers would be obtained.

### DETAILED DESCRIPTION OF THE INVENTION

### 1. Synthesis of hydroxy-terminated polyglycidil p-toluenesulfonate (PGTS)

As previously mentioned, the primary object of the invention is a process for producing new PGTS polymers of general formula (I) 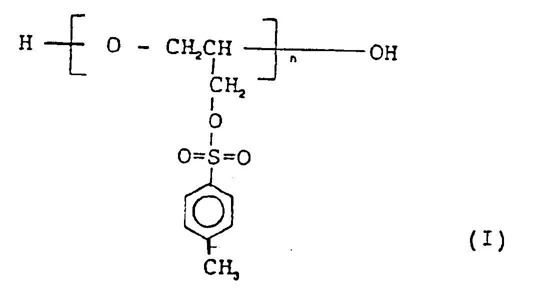
wherein n is a whole number between 5 and 100, whose synthesis is basically realized by addition in a period between 1 and 40 hours, of a corresponding monomer (GTS): glycidil p-toluenesulfonate) on a reaction mixture constituted by an inert solvent, an acid catalyst and an alcohol containing hydroxyl groups equal to or more than two which functions as an initiator.

According to the present invention, PGTS is produced starting with GTS (glycidil p-toluenesulfanate) (IUPAC: oxirane methnol 4-methylbenzene sulfanate) by a process comprising the following steps:
a) mixing in a reactor an organic inert solvent with a catalyst capable of generating oxonian ions by reacting with a monomer, and with a small amount of alcohol acting as polymerization initiator. The initiator should be capable of extending the chain in the course of the polymerization by having its hydroxyl group or groups reacting with the previously mentioned oxonium ions, and
b) adding the monomer (GTS) dissolved in an inert organic solvent on a previous mixture with agitation, at such rate that the catalyst is always in excess relative to the monomer, i.e. at a rate lower than that of the polymerization.

Solvents can be selected from inert organic solvents, preferably from the group of chloralkanes although from the operative point of view, dichlorolmethane is a more suitable solvent.

The catalyst should be selected from the group of protonic acids: HCI0₄, HSO₃F, HS0₃CI, H10₃, H₂SnCI₆, HSbCI₆, HBF₄, the last one being preferable .

The initiator should be a polyfunctional alcohol with a content of hydroxyl groups between 2 and 6, preferably, an aliphatic alcohol of low molecular weight, although polyols of molecularweight between 400 and 2000 can also be used.

As most convenient of the alcohols to be used we would mention only by way of example the following: 1,4-butanediol, 1,3-butanediol, ethyleneglycol, propyleneglycol, glycerin, tetramethyleneglycol, sorbitol and pentaerythitol.

The amounts of (GTS) monomer and solvent should be so controlled that the final polymer concentration in the reaction would be between 10 and 50% by weight, preferably between 25 and 40% by weight.

The molar relation of monomer to catalyst should be between 20 and 150, preferably between 30 and 75. If it exceeds 150, polymerization is slower or is not produced at all. If it is less than 20, polymers of slight functionality are produced, low molecular weight and high polydispersion due to the fact that excessive catalyst causes protonation of hydroxyl groups of the growing chain which react with neighboring ether groups leading to the formation of cyclic oligomers.

The molecular weight of PGTS can be controlled by modifying only the molar relation of monomer (GTS) to the initiator. This can be between 5 and 100. The addition period can be between 1 and 40 hours and depends on the amount of catalyst being used.

The polymerization temperature can be between 10°C and that of the reflux of the solvent; it should not exceed 40°C to avoid side reactions.

The polymerization is ended by neutralizing the acid catalyst with an aqueous dissolution of a weak base, for example sodium bicarbonate. The polymer, PGTS (I) is isolated by decanting the organic phase, washing it with water, drying with Na₂S0₄ or MgS0₄, filtering and eliminating the solvent by vacuum distillation.

### 2. Synthesis of energetic polymers starting with PGTS.

As a second object of the invention describes how to produce hydroxy-terminated polyglycidil azide (GAP) homopolymer of formula (II), hydroxy-terminated polyglycidilnitrate (PGN) homopolymer of formula (III), hydroxy-terminated GAP-PGN copolymers of general formula (IV): 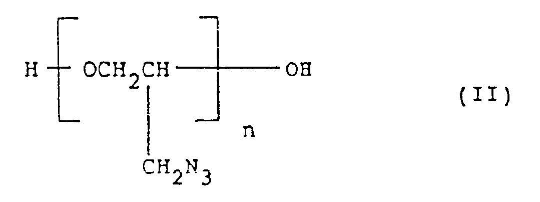
wherein n is a whole number between 5 and 100 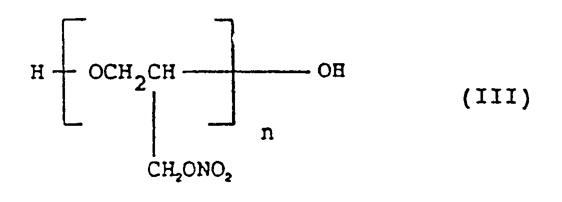
wherein n is a whole number between 5 and 100 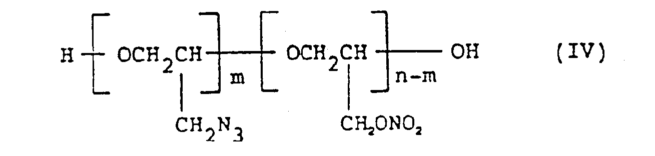
wherein n is a whole number between 5 and 100 m is a whole number smaller or equal to n.

According to the process of the present invention both GAP (II) and PGN (III) are obtained by reacting PGTS (I) with a metallic azide or with a metallic nitrate, respectively, in an organic polar solvent and in the presence of a phase transfer catalyst (PTC) according to the following reaction: 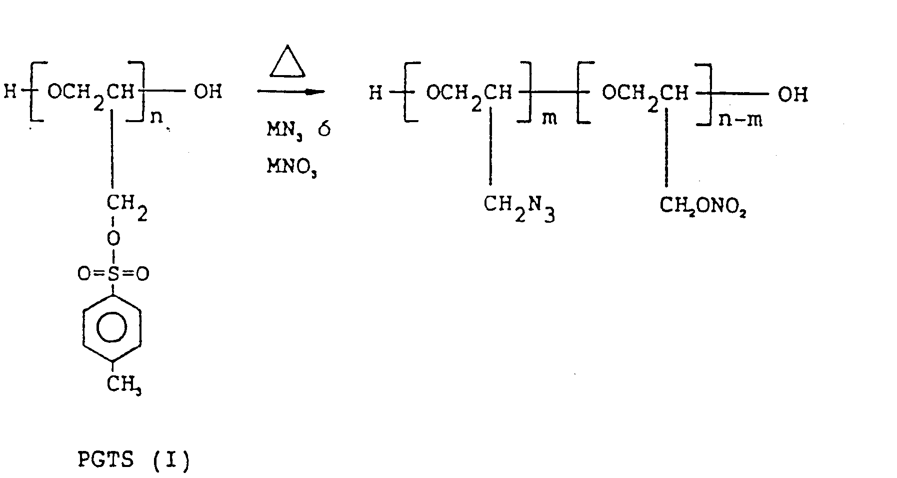
wherein n is a whole number between 5 and 100 m is a whole number smaller or equal to n, and M is a metal of the group of alkalines or alkaline earths, preferably sodium or potassium.

It will be appreciated in the above reaction formular
a) when n=0, PGN (III) homopolymer is obtained after the reaction of PGTS (I) with metallic nitrate (MNOₐ).
b) when m=n, there is obtained GAP (II) homopolymer in the reaction of PGTS (I) with metallic azide (MN₃).
c) when 0 m n, copolymers GAP-PGN (IV) are obtained of a variable composition in function of the substitution of p-toluenesulfonate groups present in the PGTS (I) by azide and nitrate groups.

Due to the fact that the reaction is realized in heterogeneous phase, the selection of the solvent is essential both for obtaining an adequate reaction rate and for a high level of substitution. The addition of quartenary ammonium salts as PTC accelerates the substitution of p-toluenesulfonate groups present in PGTS by azide and nitrate groups. As PTC can be used any quartenary ammonium salt, preferably p-toluenesulfanate of a tetrabutylammonium and tetrabutylnitrate.

As suitable solvents can be used dimethyl acetamide (DMA), dimethyl formamide (DMF), dimethyl sulfoxide (DMSO), N-methyl pyrolidon (NMP), N-methyl formamide, sulfolane and acetonitrile (ACN).

The reaction temperature can be between the ambient temperature and 100°C. For obtaining GAP (II), it is possible to carry out the reaction at temperatures between 30 and 80°C without excessively extending the reaction period. For obtaining PGN (III) it is expedient to use temperatures exceeding 90°C for accelerating the reaction.

The concentration of PGTS (I) in the middle of the reaction can be between 2 and 50% by weight, preferably between 20 and 35% by weight.

The molar relation of sodium azide to PGTS (I) for obtaining GAP (II) polymer can be between 1 and 2, preferably 1.5.

The molar relation of sodium nitrate to PGTS (I) for producing PGN (III) polymer can be between 1.5 and 4, preferably between 2 and 3.

In reacting PGTS (I) with the mixture of metallic azide and metallic nitrate there will be obtained corresponding GAP-PGN copolymers (IV), whose compositions can be fixed by controlling the molar relation of PGTS (I)/azide/nitrate and the temperature and the reaction period. Generally, one has to work with metallic nitrate stoichiometric excess considering that the nitrate group displaces the p-toluenesulfonate group with more difficulty than the azide group. Generally, it is expedient to add about up to four times the number of theoretical moles of metallic nitrate for obtaining a substitution of nitrate groups for securing the production of a copolymer of intended composition. No additional disadvantage is entailed by working with a molar excess of metallic nitrate since normally the first thing which occurs in the substitution of p-toluenesulfanate groups of PGTS (I) by azide groups and the nitrate groups is that they do not displace azide groups introduced in the PGTS molecule (I).

When the reaction is finished, the solvent is recovered by vacuum distillation. The residue of the same togetherwith the residues of those of the nucleophilic agent or agents without reacting are extracted with water with prior dissolution of the polymer or copolymer in dichloromethane (DCM). After decanting the organic phase, drying follows with Na₂S0₄ or MgS0₄, filtering and DCM is recovered by the distillation. The residue is constituted by GAP (II) or PGN (III) or its copolymers (IV) depending on the nucleophilic agent or agents being used (metallic azide, metallic nitrate or a mixture of both).

The following are examples to illustrate the invention and in no way are they meant to be limiting.

The polymers are characterized by Gel Permeation Chromatography (GPC) (solvent: THF Polyethyleneglycol as master agent, IR, ¹H-NMR and ¹³C-NMR). The hydroxyl index is determined by FTIR (Fourier Transformed Infrared Spectroscopy).

Examples 1-6 refer to synthesis of PGTS (I), examples 7-9 refer to the synthesis of GAP (II), examples 10 and 11 refer to the synthesis of PGN (III) and example 12 refers to the synthesis of a copolymer GAP-PGN.

### EXAMPLE 1

In a reactor are mixed 0.30 g. (0.00326 moles) of glycerin, 30 g. of dichloromethane and 0.0705 g. (4.41×10⁻⁴ moles) of a solution of BF₄H to 55% p/p in ether. To this mixture is added at 35°C for a period of 1.5 h. a solution of 30 g. (0.171 moles) of p-toluene sulfonate of glycidil in 30 g. dichloromethane. When the addition is over, the reaction is maintained in reflux for 3 h. after which the catalyst is neutralized with 100 ml. of a 5% aqueous solution of NaHCOₐ.

After the phases are decanted, the organic materials are washed 2 times with 100 ml. water, dried with anhydrous Na₂S0₄, filtered and the solvent is eliminated by evaporation in vacuo. The residue is formed by 29 g. of substrate (GTS). The polymerization of the same has not been produced.

### EXAMPLE 2

The process described in example 1 has been repeated with the exception that the amount of catalyst was 0.42 g. (0.0026 moles) whereby the relation of molar monomer/catalyst is 50 instead of 297 (Example 1). The polymerization temperature was 23°C. The period of addition 33 h. and the period after the addition 1 h. After withdrawing the product, there was obtained 31.2 g. (yield 99.2%) of a very viscous compound whose ¹H-NMR, IR spectra, as well as its molecular weight determined by GPC clearly indicated that the obtained product was a hydroxy-terminated PGTS polymer free of monomer. Its characteristics were as follows:
Mw: 1906 (molecular weight of average weight)
Mn: 1334 (molecular weight of average number)
OH: 0.56 meq/g
¹H-RMN: õ(CDCI₃): 2,39 (3H,S); 3,48 (3H,m); 4 (2H,m); 7,30 (2H,d); 7,74 (2H,d) ppm.
IR: vmax (film): 3550, 3080, 2900, 1598, 1500, 1458, 1360, 1318, 1298, 1180, 1100, 990, 820, 745, 670 cm-1.
¹³C-RMN: δ(CDCl₃): 145,1; 132,9; 130,1; 128; 77,2; 69,3; 69; 21,7 ppm.

### EXAMPLE 3

The process described in Example 2 has been repeated, but the period of addition in this case was 4 h. and the period after the addition 1.5 h. There were obtained 29.26 g. (yield 96.5%) of polymer PGTS, whose spectrum characteristics were identical with those of the polymer obtained in Example 2:
Mw: 1976; Mn: 1334; OH: 0.54 meq/g
This example and the preceding one clearly illustrate the importance of the molar relation monomer/catalyst for producing polymerization.

### EXAMPLE 4

The process described in example 3 has been repeated but the polymerization was carried out at a reflux temperature (40-41°C). There was obtained 30.4 g. polymer PGTS (yield 100%).

Mw: 1818; Mn: 1131; OH: 0.55 meq/g

The spectrum is identical with the one in Examples 2 and 3.

### EXAMPLE 5

The process described in example 4 has been repeated with the exception that the amount of glycerin was 0.15 g. (0.00163 moles). There were obtained 30.2 g. polymer PGTS (yield 100%).

Mw: 1948; Mn: 1215; OH: 0.47 meq/g

The IR spectrum was equal to the one in Example 4.

### EXAMPLE 6

The process described in Example 4 was repeated but with 0.15 g. glycerin (1,63.10-³ moles) and 0.28 g. of BF₄H to 55% ether (0.00174 moles). The period of addition was 5.5 h. and after addition 17.5 h. From the moment when the addition ended, two samples were taken: one after 1.5 h. and the other at the end of the reaction. In both cases, the yield of the obtained PGTS polymer was 53%. Half of the monomer did not polymerize.

The example clearly shows how the relation monomer/catalyst (75 in this case) is extremely important for achieving a high degree of polymerization.

### EXAMPLE 7

One starts with polyglycidil p-toluenesulfonate (PGTS) having the following characteristics:
Mw=1906 (molecular weight average in weight)
Mn=1334 (molecular weight average in number)
OH=0.56 meq/g

For one hour at 95°C 10 g. of said polymer dissolved in 30 g. DMA are reacted with 4.3 g. sodium azide. After the end of the reaction are added after freezing 100 ml. DCM and are extracted 6 times with 1.5 liters water each time. After drying the organic phase with Na₂S0₄, DCM is recovered by distillation. The residue (2.3 g.) constitutes a reddish viscous liquid whose IR and NMR spectrum indicates that it is GAP. The molecular weight determined by GPC (using polyethyleneglycol as master agent in THF) were as follows:
Mw=1410
Mn=1080
yield=53%
% azide groups=100%
hydroxyl index=1.24 meq/g

Spectrum characteristics:
IR: vmax (film): 3441, 2923, 2874, 2521, 2100, 1441, 1346, 1279, 1122, 936 cm-¹
¹H-RMN: δ(CDCI₃): (3,45-3,80) (3H, m); (3,2-3,45) (2H,m) ppm

### EXAMPLE 8

One starts with PGTS having the following characteristics:
Mw=1976
Mn=1216
OH=0.5 meq/g

The reaction was carried out as in example 7 with the difference that the solvent used was ACN and there were added 1.33 g. tetrabutylammonium nitrate. The temperature was 85°C and the reaction period 8.5 h.

3.54 g. of a viscous liquid were obtained whose spectrum characteristics indicated that it was GAP with a percentage of 97% of azide groups. The molecular weights were:
Mw=1573
Mn=1156
yield=78.5%
hydroxyl index=1.10 meq/g

### EXAMPLE 9

The process described in Example 7 was repeated but DMF was used as a solvent. The reaction period was 2 h. There was obtained 3.23 g. GAP with an azide percentage of 99%.
Molecular weight
Mw=1471
Mn=1011
yield=74.4%
hydroxyl index=1.11 meq/g

### EXAMPLE 10

The process described in Example 7 was repeated but sodium azide was replaced by sodium nitrate. The period of reaction was 31.5 h.

There was obtained 1.8 g. of a viscous liquid whose spectrum characteristics indicated that it was PGN with a percentage of nitrate groups of 91% and 9% of p-toluenesulfonate groups.
Molecular weight
Mw=1402
Mn=938
yield=67.2%
hydroxyl index=0.91 meq/g

Spectrum characteristics
IR: vmax (film): 3358, 2892, 1631, 1395, 1238, 1176, 1122, 992, 861, 736, 701 cm-¹
¹H-RMN: δ(CDCI₃); 4,4-4,7 (2H,m); 3,4-3,8 (3H,m) ppm,

marks of the polymerized glycidil nitrate groups 7,7 (2H,d); 7,3 (2H,d); 3,9-4,2 (2H,m) 3,4-3,8 (3H,m); 2,41 (3H,s) ppm, marks of the polymerized glycidil p-toluene sulfanate groups.

### EXAMPLE 11

The process described in example 10 has been repeated but adding 1.32 g. tetrabutylammonium nitrate. The reaction period was 12.5 h. There was obtained 5.45 g. PGN with a content of nitrate groups of 78.4% and as determined by NMR.
Molecular weight
Mw=1564
Mn=1039
yield=87.2%
hydroxyl index=0.74 meq/g

### EXAMPLE 12

One starts with polyglycidil p=toluenesulfanate (PGTS) having the following characteristics
Mw=1906 (molecular weight average in weight)
Mn=1334 (molecular weight average in number)
OH=0.56 meq/g

For producing a GAP-PGN copolymer with the composition GAP:PGN 50:50.

During 20 h. at 95°C, 100 g. of said polymer dissolved in 300 g. DMA are reacted with the mixture formed by 14.3 g. (0.22 moles) sodium azide and 74.8 g. (0.88 moles) sodium nitrate (four times are added the number of moles of sodium nitrate over the theoretical). When the reaction finishes, 90% DMA are distilled in vacuo. Subsequently, after freezing 150 g. DCM are added and extraction follows 6 times with one liter water each time. After drying the organic phase with Na₂S0₄, DCM is recovered by distillation. The residue (36.9 g.) is a GAP-PGN copolymer with the composition GAP:PGN 50:47 as determined by IR and NMR.

The overall constitution of p-toluenesulfonate groups was 97% (50% GAP and 47% PGN) leaving 3% of nitrate groups without being introduced in the PGTS molecule. The yield was 75%.

Having described the object of this invention, it is declared that the gist of the invention is defined in the following claims.

## Claims

1. A process for producing a hydroxy-terminated polyglycidil p-toluenesulfanate polymer (PGTS) of general formula (I) 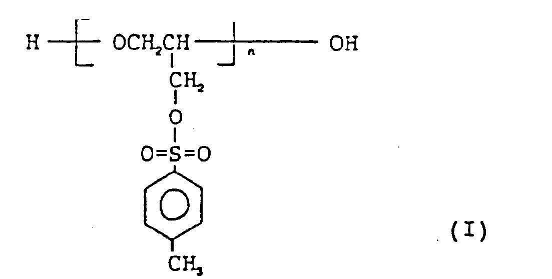
wherein n is a whole number between 5 and 100 characterized by comprising:
a) mixing an inert organic solvent with a catalyst capable of generating oxonium ions by reacting with the monomer (GTS, glycidil p-toluene sulfanate) and an alcohol, and
b) adding the dissolved monomer in an inert organic solvent to the previous mixture while agitating so that the speed of addition is less than that of polymerization.

2. The process according to claim 1, characterized by the fact that the catalyst is a protonic acid, selected from the group comprising HC10₄, HS0₃F, HSO₃Cl, H10₃, H₂SnClₛ, HSbCl₆, HBF₄, preferably HBF₄.

3. The process according to claim 1 characterized by the fact that the inert organic solvent belongs to the group of chloroalkanes, being preferably dichloromethane.

4. The process according to claim 1 characterized by the fact that the alcohol used is a polyfunctional alcohol containing hydroxyl groups comprised between 2 and 6, or is a polyol of molecular weight between 400 and 2000.

5. The process according to claims 1 and 2, characterized in that the molar ratio of monomer (GTS) to catalyst is between 20 and 150, preferably between 30 and 75.

6. The process according to claims 1 and 4 characterized by the fact that the molar ratio monomer (GTS)/alcohol is between 5 and 100.

7. The process according to the previous claims characterized in that the polymerization temperature is between 10°C and the temperature of reflux of the solvent, preferably between 10 and 40°C.

8. The process according to the preceding claims characterized in that the period of addition of the monomer (GTS) is between 1 and 40 h.

9. Hydroxy-terminated p-toluenesulfonate polyglycidil (PGTS) polymer of general formula (I) 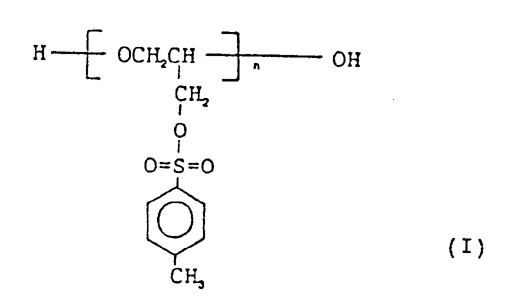
wherein n is a whole number between 5 and 100.

10. The process for producing hydroxy-terminated (II) azide glycidil polymers (GAP), hydroxy-terminated (III) glycidil nitrate (PGN), and hydroxy-terminated (IV) GAP-PGN copolymers, of functionality equal or higher than 2 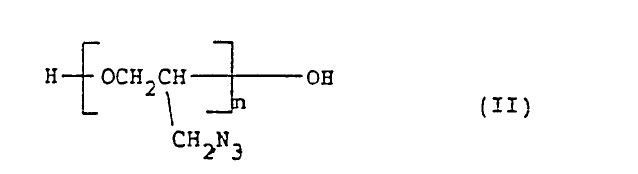 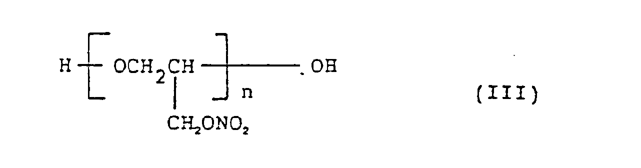 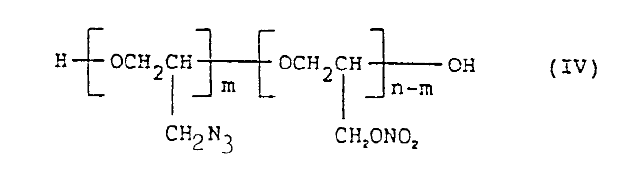
wherein n is a whole number between 5 and 100
m is a whole number smaller or equal to n;
characterized by reacting a polymer of p-toluene sulfonate (I) polyglycidil 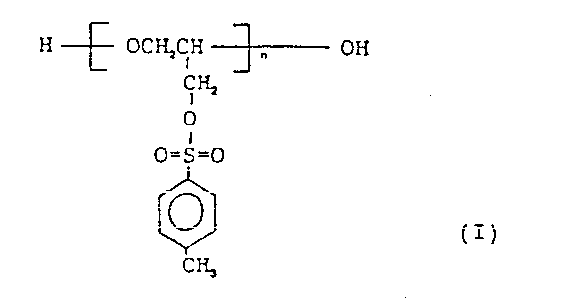
wherein n is a whole number between 5 and 100 in a polar organic solvent, and optionally in a phase transfer catalyst (PTC) with:
i) a metallic azide for the corresponding GAP (II); or
ii) a metallic nitrate for the corresponding PGN (III); or
iii) a mixture of a metallic azide with a metallic nitrate for the corresponding GAP-PGN (IV) copolymers.

11. The process according to claim 10, characterized in that the polar organic solvent is preferably selected from dimethylacetamide, dimethylformamide, N-methylpyrolidone, dimethylsulfoxide, sulfolane and acetonitrile.

12. The process according to claim 10 characterized by the fact that the molecular weight of PGTS is between 1100 and 23000.

13. The process according to claim 10 characterized in that the reaction temperature is between the ambient temperature and 100°C, preferably between 50 and 100°C.

14. The process according to claim 10, characterized by the fact that while using a phase transfer catalyst, the same can be any quatenary ammonium salt, preferably p-toluenesulfonate of tetrabutylammonium and tetrabutylammonium nitrate.

15. The process according to claim 10 for producing GAP (II), characterized in that the metallic azide is an azide of alkaline metal or alkaline-earth, preferably sodium azide.

16. The process according to claim 15 characterized in that the molar ratio of metallic azide to PGTS is between 1 and 2, preferably 1,5.

17. The process according to claim 15, characterized by being carried out at a temperature between the ambient temperature and 95°C.

18. The process according to claim 10 for producing PGN (III), characterized in that the metallic nitrate is a nitrate of alkaline metal or alkaline-earth, preferably sodium nitrate.

19. The process according to claim 18, characterized in that the molar ratio of sodium nitrate to PGTS is between 1.5 and 4, preferably between 2 and 3.

20. The process according to claim 19, characterized in being carried out at the temperature between 90 and 100°C.

21. The process according to claim 10 for producing GAP-PGN (IV) copolymers, characterized by reacting the PGTS dissolved in a polar organic solvent with a mixture of metallic azide and metallic nitrate of variable molar ratio in function of the final composition of the GAP-PGN copolymer to be obtained.

22. The process according to claim 21, characterized by the fact that both the metal of azide and of nitrate are an alkaline metal or alkaline-earth.

23. The process according to claim 22, characterized in that the metallic azide is a sodium azide and the metallic nitrate is a sodium nitrate.

24. The process according to claim 21, characterized in that the molar ratio metallic azide/metallic nitrate in the said mixture includes a relative excess of metallic nitrate over the stoichiometric.

25. The process according to claim 21, characterized in being carried out at the temperature between the ambient temperature and 100°C.

26. GAP-PGN copolymers of functionality equal to or superior to 2 of the general formula (IV) 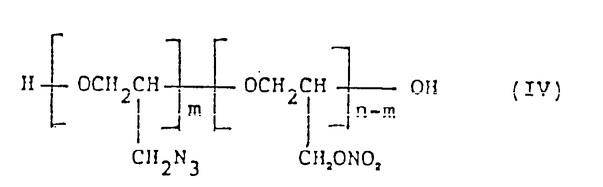
wherein n is a whole number between 5 and 100;
m is a whole number smaller or equal to n.
